(19) Europäisches Patentamt
European Patent Office
Office européen des brevets

(11) **EP 3 496 970 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(21) Anmeldenummer: **17731093.5**

(22) Anmeldetag: **08.06.2017**

(51) Internationale Patentklassifikation (IPC):
*B60W 30/02* (2012.01)   *B60K 28/16* (2006.01)
*B60W 30/18* (2012.01)   *B60L 15/36* (2006.01)
*B60K 7/00* (2006.01)    *B60K 1/00* (2006.01)
*B60K 17/354* (2006.01)  *B60K 17/356* (2006.01)

(52) Gemeinsame Patentklassifikation (CPC):
**B60W 30/18172; B60K 1/00; B60K 7/0007;
B60K 17/354; B60K 17/356; B60K 28/16;
B60L 15/36;** B60K 2001/001; B60K 2007/0092;
B60W 2520/10; B60W 2520/105; B60W 2520/125;
B60W 2520/14; B60W 2520/28; B60W 2540/18;

(Forts.)

(86) Internationale Anmeldenummer:
**PCT/EP2017/063937**

(87) Internationale Veröffentlichungsnummer:
**WO 2018/028854 (15.02.2018 Gazette 2018/07)**

(54) **VERFAHREN UND VORRICHTUNG ZUM BETREIBEN EINES KRAFTFAHRZEUGS, KRAFTFAHRZEUG**

METHOD AND DEVICE FOR OPERATING A MOTOR VEHICLE, AND MOTOR VEHICLE

PROCÉDÉ ET DISPOSITIF POUR FAIRE FONCTIONNER UN VÉHICULE À MOTEUR ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2016   DE 102016214925**

(43) Veröffentlichungstag der Anmeldung:
**19.06.2019   Patentblatt 2019/25**

(73) Patentinhaber: **Robert Bosch GmbH
70442 Stuttgart (DE)**

(72) Erfinder: **ERBAN, Andreas
74369 Loechgau (DE)**

(56) Entgegenhaltungen:
**EP-A1- 2 752 340        DE-A1- 4 133 060
DE-A1-102009 055 160     JP-A- 2005 020 830
JP-A- 2013 176 203**

(52) Gemeinsame Patentklassifikation (CPC): (Forts.)
B60W 2552/40; B60W 2710/083; B60W 2720/406;
B60Y 2200/91

## Beschreibung

Die Erfindung betrifft ein Verfahren zum Betreiben eines Kraftfahrzeus, das zumindest eine Radachse mit zwei Antriebsrädern aufweist, wobei jedes Antriebsrad durch eine radindividuelle Antriebseinrichtung antreibbar ist, um das Kraftfahrzeug auf einer Fahrbahn zu bewegen.

Weiterhin betrifft die Erfindung eine Vorrichtung zum Betreiben eines derartigen Kraftfahrzeugs sowie ein Kraftfahrzeug mit einer solchen Vorrichtung.

### Stand der Technik

Bei Kraftfahrzeugen ist es mittlerweile üblich, dass durch das radindividuelle Einstellen von Bremsmomenten die Fahrstabilität des Kraftfahrzeugs auch in kritischen Situationen gewährleistet wird. Insbesondere ist hierbei das ESP-System (ESP = elektronisches Stabilitätsprogramm) zu nennen. Hierbei wird automatisiert ein Bremseingriff zur Traktionskontrolle vorgenommen, um Räder des Kraftfahrzeugs daran zu hindern, die Haftreibung zur Fahrbahn zu verlieren. Dadurch wird erreicht, dass auch in kritischen Fahrsituationen Seitenführungskräfte an den Rädern gewährleistet werden, welche einen sicheren Fahrbetrieb des Kraftfahrzeugs erlauben.

Durch die zunehmende Elektrifizierung von Kraftfahrzeugen ist es darüber hinaus immer einfacher möglich, Antriebsräder des Kraftfahrzeugs individuell mit einem Drehmoment zu beaufschlagen. Insbesondere beim Einsatz radindividueller Antriebe, die direkt oder durch ein Getriebe mit dem jeweiligen Antriebsrad verbunden sind, ist das Einstellen eines radindividuellen Drehmoments auf einfache Art und Weise möglich. Ein Verfahren zur Steuerung einer elektrischen angetrieben Radachse eines Kraftfahrzeugs mit radindividuellen Antrieben ist

beispielsweise aus der Offenlegungsschrift DE 10 2009 055 160 A1 bekannt.

Die EP 2 752 340 A1 offenbart ein Verfahren zur Stabilisierung eines Fahrzeugs. Falls es festgestellt wird, dass die Reibwerte an den angetriebenen Rädern sich unterscheiden, wird das Moment an dem Rad mit höherem Reibwert modifiziert. Die Momente am Rad mit niedrigem Reibwert werden dagegen nicht beeinflusst. Am Rad mit höherem Reibwert kommt eine Änderung des antreibenden Momentes, ein Aufbringen eines Bremsmomentes und/oder eine sonstige Maßnahme in Betracht, über die die Momentenbilanz an diesem Rad beeinflusst werden kann. Der Antrieb des Fahrzeugs kann ausschließlich elektromotorisch ausgeführt sein, beispielsweise mit zwei Radnabenmotoren.

### Offenbarung der Erfindung

Das erfindungsgemäße Verfahren mit den Merkmalen des Anspruchs 1 hat den Vorteil, dass zur Fahrstabilisierung im Antriebsfall beziehungsweise bei Beschleunigung auf Bremseingriffe zumindest weitestgehend verzichtet werden kann, wodurch das im Betrieb einem Verschleiß unterliegenden Bremssystem geschont und dadurch dessen Lebensdauer erhöht wird. Gleichzeitig wird jedoch die gleiche Sicherheit wie bei den bekannten Bremseingriffen zur Traktionskontrolle für das Kraftfahrzeug gewährleistet. Erfindungsgemäß wird dies dadurch erreicht, dass die Antriebseinrichtungen der Radachse in Abhängigkeit von einer Differenz zwischen den an den Antriebsrädern dieser Radachse auf die Fahrbahn absetzbaren Längskräften angesteuert werden. Damit werden die Antriebseinrichtungen derart angesteuert, dass sie beispielsweise unterschiedliche Drehmomente erzeugen, um der das Haftreibungspotential an dem jeweiligen Rad beeinflussenden Differenz gerecht zu werden, sodass eine Radachse und die Antriebsräder nicht die Haftreibung zur Fahrbahn verlieren. Durch Berücksichtigen der Reibwertdifferenz wird insbesondere gewährleistet, dass beispielsweise in einer $\mu$-Split-Situation beide Antriebsräder derselben Radachse ein Antriebsdrehmoment sowie Seitenführungskräfte auf die Fahrbahn bringen.

Erfindungsgemäß wird die Differenz in Abhängigkeit von einem aktuellen Reibwert zwischen der Fahrbahn und dem jeweiligen Antriebsrad bestimmt. Vorzugsweise wird die Differenz zusätzlich in Abhängigkeit einer Radgeschwindigkeit des jeweiligen Antriebsrads, einer Längsbeschleunigung des Kraftfahrzeugs, einer Querbeschleunigung des Kraftfahrzeugs und/oder einer Aufstandskraft des jeweiligen Antriebsrads auf der Fahrbahn bestimmt.

Insbesondere in Abhängigkeit von der Aufstandskraft und dem Reibwert wird festgestellt, welche Haftreibung zwischen Fahrbahn und Antriebsrad aktuell wirkt. Dabei ergibt sich die Aufstandskraft unter anderem aus der Längsbeschleunigung und der Querbeschleunigung des Kraftfahrzeugs. In Kenntnis der aktuellen Haftreibung zwischen Antriebsrad und Fahrbahn ist die jeweils absetzbare Längskraft ermittelbar, sodass in Abhängigkeit dieser die Antriebseinrichtungen vorteilhaft angesteuert werden können, wie oben bereits beschrieben.

Erfindungsgemäß ist vorgesehen, dass in Abhängigkeit von der Differenz eine Drehmomentdifferenz für die Antriebsräder der Radachse bestimmt und bei der Ansteuerung der Antriebseinrichtung dieser Radachse berücksichtigt wird. Die Drehmomentdifferenz ist dabei insbesondere proportional zur Differenz gewählt, sodass beide Antriebsräder zumindest im Wesentlichen dasselbe Reibwertpotential nutzen.

Weiterhin ist bevorzugt vorgesehen, dass die Antriebseinrichtungen dazu angesteuert werden, in Abhängigkeit von einem angeforderten Achsantriebsdrehmoment für die Radachse jeweils ein Soll-Raddrehmoment zu erzeugen. Das Soll-Raddrehmoment wird somit in Abhängigkeit von einem durch den Fahrer oder ein automatisiertes Fahrsystem angefordertes Achsantriebsdrehmoment vorgegeben, mit welchem das Kraftfahrzeug insgesamt angetrieben werden soll.

Dabei ist bevorzugt vorgesehen, dass das jeweilige Soll-Raddrehmoment aus der Hälfte des Achsantriebsdrehmoments und der Hälfte der Drehmomentdifferenz bestimmt wird. Damit die Radachse das gewünschte Achsantriebssolldrehmoment insgesamt abgibt, wird dieses gleichmäßig auf die beiden Antriebsräder beziehungsweise die beiden Antriebseinrichtungen aufgeteilt. Um die Drehmomentdifferenz an den Rädern vorteilhaft einzustellen, wird diese ebenfalls hälftig auf beide Antriebseinrichtungen aufgeteilt.

Insbesondere ist dabei vorgesehen, dass die Hälfte der Drehmomentdifferenz an einem der Antriebsräder zu der Hälfte des Achsantriebsdrehmoments addiert und an dem anderen der Antriebsräder von der Hälfte des Achsantriebsdrehmoments subtrahiert wird. Dadurch wird auf einfache Art und Weise an den Antriebsrädern die gewünschte Drehmomentdifferenz eingestellt und gleichzeitig das gewünschte Achsantriebsdrehmoment der Radachse gewährleistet.

Vorteilhafterweise wird eine maximale Drehmomentdifferenz in Abhängigkeit von einer aktuellen Fahrsituation vorgegeben. Die Drehmomentdifferenz wird somit in Abhängigkeit von einer aktuellen Fahrsituation des Kraftfahrzeugs limitiert. Dadurch wird beispielsweise ein hochdynamischer beziehungsweise sportlicher Fahrbetrieb des Kraftfahrzeugs ermöglicht.

Die aktuelle Fahrsituation wird bevorzugt in Abhängigkeit von einem eingestellten Lenkwinkel, einem von dem Fahrer des Kraftfahrzeugs aufgebrachten Lenkmoment, einer Querkraft, einer Beschleunigungskraft, einer Drehrate und/oder einer Fahrgeschwindigkeit des Kraftfahrzeugs ermittelt. Insbesondere werden die Längsbeschleunigungen und die Querbeschleunigungen, wie zuvor bereits erörtert, erfasst und für die Auswertung der Aufstandskräfte der Antriebsräder berücksichtigt.

Die erfindungsgemäße Vorrichtung mit den Merkmalen des Anspruchs 8 zeichnet sich durch ein speziell hergerichtetes Steuergerät aus, das bei bestimmungsgemäßem Gebrauch das erfindungsgemäße Verfahren durchführt. Es ergeben sich hierbei die bereits genannten Vorteile. Insbesondere erlauben das Verfahren und die Vorrichtung ein komfortables Fahren, auch auf inhomogenen Reibwerten der Fahrbahn. Speziell an Radachsen mit den radindividuellen Antriebseinrichtungen müssen keine Bremsmomente zur Radstabilisierung eingesetzt werden. Der Fahrer erreicht mit derselben Gaspedalstellung ein reproduzierbares Fahrverhalten, unabhängig davon, ob sich das Kraftfahrzeug auf einer Fahrbahn mit einem homogenen Reibwert oder mit einem inhomogenen Reibwert bewegt. Dies ist zumindest so lange gewährleistet, wie es die Potentiale der Antriebseinrichtungen erlauben. Die auf Reibung basierenden Radbremsen des Kraftfahrzeugs werden geschont, der Verschleiß minimiert und der Komfort weiter erhöht. Insbesondere geht auch keine Energie in den Radbremsen durch einen Bremseingriff verloren, sodass ein energieeffizienter Betrieb des Kraftfahrzeugs durchführbar ist.

Das erfindungsgemäße Kraftfahrzeug mit den Merkmalen des Anspruchs 9 zeichnet sich durch die erfindungsgemäße Vorrichtung aus. Es ergeben sich hierbei die bereits genannten Vorteile.

Insbesondere sind die Antriebseinrichtungen jeweils als Elektromaschinen, insbesondere als radnahe Elektromaschinen, ausgebildet. Hierdurch ist eine direkte und verlustfreie Kraftübertragung von den Elektromaschinen auf das jeweilige Antriebsrad gewährleistet.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erörtert werden. Dazu zeigen

Figur 1     ein Kraftfahrzeug gemäß einem ersten Ausführungsbeispiel und

Figur 2     ein Kraftfahrzeug gemäß einem zweiten Ausführungsbeispiel, jeweils in einer vereinfachten Draufsicht.

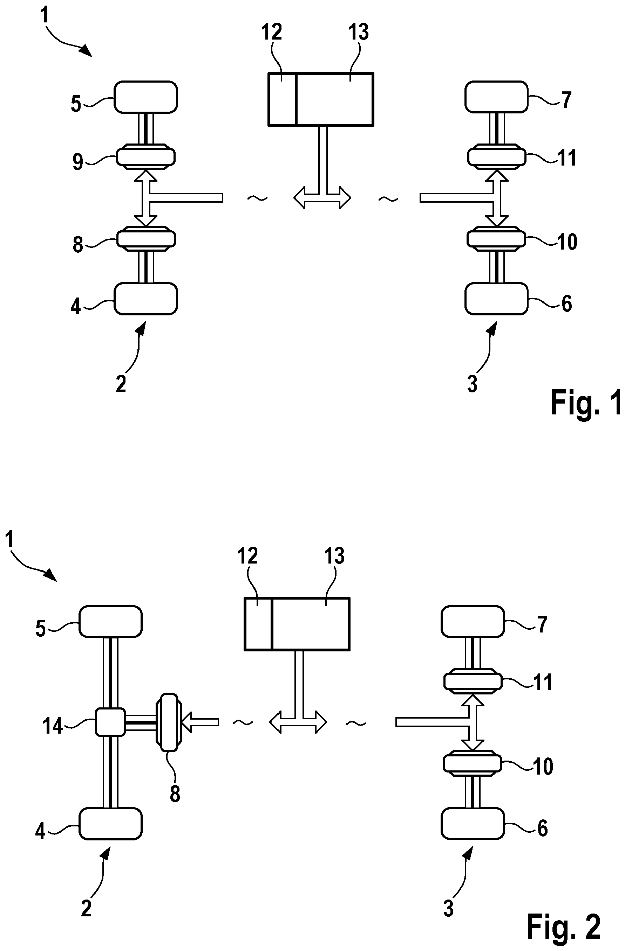

Figur 1 zeigt in einer vereinfachten Draufsicht ein Kraftfahrzeug 1, das eine Vorderradachse 2 und eine Hinterradachse 3 aufweist. Beide Radachsen 2, 3 weisen jeweils zwei Antriebsräder 4, 5 beziehungsweise 6, 7 auf. Jedem der Antriebsräder 4 bis 7 ist jeweils eine Antriebseinrichtung 8, 9, 10 und 11 zugeordnet. Die Antriebseinrichtungen 8 bis 11 sind mit dem jeweiligen Antriebsrad 4 bis 7 gekoppelt beziehungsweise mechanisch wirkverbunden. Gemäß dem vorliegenden Ausführungsbeispiel sind die Antriebseinrichtungen 8 bis 11 jeweils als Elektromaschine ausgebildet, die insbesondere motorisch und optional auch generatorisch betreibbar sind. Die Antriebsmaschinen 8 bis 11 werden durch ein Steuergerät 12 angesteuert und erhalten die zu ihrem Antrieb notwendige elektrische Energie von einem elektrischen Energiespeicher 13.

Das Steuergerät 12 steuert dabei die Antriebseinrichtungen 8, 9 beziehungsweise 10, 11 der jeweiligen Radachse 2, 3 in Abhängigkeit von einer Differenz zwischen den an den Antriebsrädern 4, 5 beziehungsweise 6, 7 der jeweiligen Radachse 2, 3 auf die Fahrbahn absetzbaren Längskräften an, um ein stabilen Fahrbetrieb ohne Haftreibungsverlust zu gewährleisten. Dabei führt das Steuergerät 12 ein Verfahren durch, welches ausgehend von einem angeforderten Achsantriebsdrehmoment für eine der Radachsen 2, 3 und einem in Abhängigkeit der Differenz bestimmten Differenzdrehmoment Soll-Raddrehmomente den Antriebseinrichtungen 8, 9 beziehungsweise 10, 11 radindividuell vorgibt, sodass radindividuelle Bremseingriffe durch ein in Figur 1 nicht dargestelltes Bremssystem zur Stabilisierung des Kraftfahrzeugs 1 entfallen.

Dadurch wird ein komfortables Fahren des Kraftfahrzeugs auch auf inhomogenen Reibwerten einer Fahrbahn erreicht, bei welchem beispielsweise für die Antriebsräder 4, 6 ein niedrigerer Reibwert zur Verfügung steht wie für die Antriebsräder 5, 7. Auch bei wechselnden beziehungsweise sich verändernden Reibwertverhältnissen ist eine stabile Führung des Kraftfahrzeugs durch ausreichend hohe Seitenführungskräfte gewährleistet. Der Fahrer erreicht mit derselben Gaspedalstellung ein reproduzierbares Fahrverhalten, unabhängig davon, ob das Kraftfahrzeug 1 sich auf einer Fahrbahn mit einem homogenen Reibwert oder auf einer Fahrbahn mit einem inhomogenen Reibwert bewegt, wobei das Bremssystem geschont und dadurch dessen Lebensdauer erhöht wird.

In Abhängigkeit von der Gaspedalbetätigung wird ein Gesamtantriebsdrehmoment für das Kraftfahrzeug 1 bestimmt. Dieses wird auf die Radachsen 2, 3 verteilt, um ein optimalen Fahrbetrieb zu gewährleisten. Aus dem Gesamtantriebsdrehmoment werden somit Antriebsdrehmomente $M_A$ für die Radachsen 2, 3 bestimmt, die gleich oder unterschiedlich vorgegeben werden können.

Üblicherweise liefert ein Regelverfahren das Antriebsdrehmoment als Summenmoment für das absetzbare Achsantriebsdrehmoment der jeweiligen Radachse, wobei bei einem klassischen Aufbau das Antriebsdrehmoment von einem einzigen Motor realisiert wird, der über ein Getriebe und ein Differentialgetriebe mit zwei Antriebsrädern einer Radachse verbunden ist. Das bekannte Regelverfahren liefert auch ein Soll-Differenzmoment das im klassischen Fall als hydraulisches Bremsmoment realisiert wird. Dieses Soll-Differenzmoment beziehungsweise die Drehmomentdifferenz wird vorliegend in Abhängigkeit von den Reibwerten der Antriebsräder 4, 5 der Radachse 2 beziehungsweise der Antriebsräder 6, 7 der Radachse 3 bestimmt. Die Reibwerte können dabei auf bekannte Art und Weise beispielsweise im Fahrbetrieb des Kraftfahrzeug 1 ermittelt werden. Aus dem Achsantriebsdrehmoment für beispielsweise die Radachse 3 und dem Differenzdrehmoment $M_D$ wird nun das Soll-Raddrehmoment $M_{10}$, $M_{11}$ für die jeweilige Antriebseinrichtung 10 und 11 der Radachse 3 bestimmt:

$$M_{10} = 0.5 * (M_A - M_D) / i_G$$

$$M_{11} = 0.5 * (M_A + M_D) / i_G$$

Dabei wird auch die Getriebeübersetzung $i_G$ zwischen der jeweiligen Antriebsmaschine 10, 11 und dem zugehörigen Antriebsrad 6, 7 berücksichtigt. Die Antriebsmaschine 8, 9 der Radachse 2 werden bevorzugt analog dazu angesteuert.

Durch dieses Verfahren wird also in Abhängigkeit von der Drehmomentdifferenz $M_D$ das jeweilige Soll-Raddrehmoment für die Antriebsmaschinen 8 bis 11 berechnet. Der Gleichanteil steckt dabei in dem halben Achsantriebsdrehmoment $M_A$, der radindividuelle Anteil in der jeweils halben Drehmomentdifferenz $M_D$.

Sobald eine Drehmomentdifferenz benötigt wird, weil sich das Kraftfahrzeug 1 beispielsweise auf einer Fahrbahn mit inhomogenem Reibwert bewegt, wird das Soll-Raddrehmoment $M_{10}$ auf der Seite mit dem niedrigeren Reibwert um den halben Wert von der Drehmomentdifferenz $M_D$ abgesenkt werden. Auf der Seite mit dem höheren Reibwert wird das Soll-Raddrehmoment $M_{11}$ gleichzeitig um den halben Wert der Drehmomentdifferenz $M_D$ erhöht.

Im Unterschied zu klassischen Verfahren, bei welchem ein Bremseingriff zur Stabilisierung des Fahrbetriebs dient, ist somit eine Drehmomenterhöhung möglich, wodurch eine verbesserte Fahrstabilität ermöglicht ist. Die Soll-Drehmomente werden durch das jeweilige Antriebspotential der Antriebsmaschinen 8 bis 11 limitiert. Das Antriebsdrehmoment $M_A$ wird begrenzt durch die Fahrzeugsteuerung, beispielsweise basierend auf der Fahrervorgabe oder eines anderweitig bestimmten Wertes für das Gesamtantriebsdrehmoment des Kraftfahrzeugs 1.

Die Drehmomentdifferenz $M_D$ wird in Abhängigkeit von der Fahrsituation auf einen maximalen Wert limitiert. Dabei werden insbesondere der Lenkaufwand des Fahrers, also auf das aufgebrachte Lenkmoment, die Fahrzeuggeschwindigkeit, das ausgenutzte Reibwertpotential, sowie weitere bekannte Größen zur Charakterisierung der Fahrsituation eines Kraftfahrzeugs herangezogen.

Figur 2 zeigt ein zweites Ausführungsbeispiel, wobei aus Figur 1 bereits bekannte Elemente mit den gleichen Bezugszeichen versehen sind. Im Folgenden soll im Wesentlichen auf die Unterschiede eingegangen werden.

Im Unterschied zu dem vorhergehenden Ausführungsbeispiel ist hierbei vorgesehen, dass der Vorderradachse 2 nur eine Antriebsmaschine 8 zugeordnet ist, die durch ein Differentialgetriebe 14 mit beiden Antriebsrädern 5, 4 der Vorderradachse 2 wirkverbunden beziehungsweise gekoppelt ist. Die Antriebsmaschinen 10, 11 der Hinterradachse 3 werden wie zuvor beschrieben angesteuert. Bei der Vorderradachse 2 wird in Abhängigkeit von der Drehmomentdifferenz $M_D$ an der Vorderradachse 2 durch aktive Bremseingriffe an dem jeweiligen Rad 4, 5 wie aus dem Stand der Technik bekannt, realisiert. Für den Gesamtantrieb gilt in diesem Fall:

$$M_8 = M_A / i_{G14}$$

$$M_{10} = 0.5 * (M_A - M_D) / i_G$$

$$M_{11} = 0.5 * (M_A + M_D) / i_G$$

Bei der Bestimmung des Soll-Raddrehmoments $M_8$ für die Antriebsmaschine 8 beziehungsweise die Antriebseinrichtung 8 wird somit lediglich die Getriebeübersetzung $i_{G14}$ sowie das Achsantriebsdrehmoment $M_A$ für die Radachse 2 berücksichtigt. Die Drehmomentdifferenz wird, wie zuvor bereits erwähnt, durch Bremseingriffe und das Differentialgetriebe 14 realisiert.

Selbstverständlich kann das beschriebene Verfahren auch bei einem Kraftfahrzeug 1 durchgeführt werden, welches beispielsweise an der Vorderradachse 2 lediglich ein Antriebsrad aufweist, oder mehr als zwei Radachsen mit jeweils zwei Antriebsrädern und zwei Antriebsmaschinen aufweist.

**Patentansprüche**

1. Verfahren zum Betreiben eines Kraftfahrzeugs (1), das zumindest eine Radachse (2,3) mit zwei Antriebsrädern (4-7) aufweist, wobei jedes Antriebsrad (4-7) durch eine radindividuelle Antriebseinrichtung (8-11) antreibbar ist, um das Kraftfahrzeug auf einer Fahrbahn zu bewegen, wobei in Abhängigkeit von einem aktuellen Reibwert zwischen der Fahrbahn und dem jeweiligen Antriebsrad (4-7) eine Differenz zwischen den an den Antriebsrädern (4-7) der Radachse (2,3) auf die Fahrbahn absetzbaren Längskräften bestimmt wird, **dadurch gekennzeichnet, dass** in Abhängigkeit von der Differenz eine Drehmomentdifferenz für die Antriebsräder (4-7) bestimmt und bei der Ansteuerung der Antriebseinrichtungen (8-11) eingestellt wird, sodass die Antriebseinrichtungen (8-11) der Radachse (2,3) in Abhängigkeit von der Differenz zwischen den an den Antriebsrädern der Radachse (2,3) auf die Fahrbahn absetzbaren Längskräften angesteuert werden.

2. Verfahren nach Anspruch 1, **dadurch gekennzeichnet, dass** die Differenz zusätzlich in Abhängigkeit von einer Radgeschwindigkeit, des jeweiligen Antriebsrads, einer Längsbeschleunigung des Kraftfahrzeugs (1) und/oder einer Aufstandskraft des jeweiligen Antriebsrads (4-7), bestimmt wird.

3. Verfahren nach einem der vorhergehenden Ansprüche, **dadurch gekennzeichnet, dass** die Antriebseinrichtungen (8-11) dazu angesteuert werden, in Abhängigkeit von einem angeforderten Achsantriebsdrehmoment ($M_A$) für die Radachse (4-7) jeweils ein Soll-Raddrehmoment ($M_{10},M_{11}$) zu erzeugen.

4. Verfahren nach einem der vorhergehenden Ansprüche, **dadurch gekennzeichnet, dass** das jeweilige Soll-Raddrehmoment ($M_{10},M_{11}$) aus der Hälfte des Achsantriebsdrehmoments ($M_A$) und der Hälfte der Drehmomentdifferenz ($M_D$) bestimmt wird.

5. Verfahren nach einem der vorhergehenden Ansprüche, **dadurch gekennzeichnet, dass** die Hälfte der Drehmomentdifferenz ($M_D$) an einem der Antriebsräder (4-7) zu der Hälfte des Antriebsdrehmoments ($M_A$) addiert und an dem anderen der Antriebsräder (4-7) von der Hälfte des Antriebsdrehmoments ($M_A$) subtrahiert wird.

6. Verfahren nach einem der vorhergehenden Ansprüche, **dadurch gekennzeichnet, dass** eine maximale Drehmomentdifferenz in Abhängigkeit von einer aktuellen Fahrsituation vorgegeben wird.

7. Verfahren nach dem Anspruch 6, **dadurch gekennzeichnet, dass** die Fahrsituation in Abhängigkeit von einem eingestellten Lenkwinkel, einem von dem Fahrer des Kraftfahrzeugs (1) aufgebrachten Lenkmoment, einer Querkraft, einer Beschleunigungskraft, einer Drehrate und/oder einer Fahrgeschwindigkeit des Kraftfahrzeugs (1) ermittelt wird.

8. Vorrichtung zum Betreiben eines Kraftfahrzeugs (1), das zumindest eine Radachse (2,3) mit zwei Antriebsrädern (4-7) aufweist, wobei jedem Antriebsrad (4-7) eine Antriebseinrichtung (8-11) zugeordnet ist, **gekennzeichnet durch** ein ein Steuergerät, das eingerichtet ist, das Kraftfahrzeug so anzusteuern, dass es gemäß des Verfahrens nach einem der Ansprüche 1 bis 7 betrieben wird.

9. Kraftfahrzeug (1), mit zumindest einer Radachse (2,3), die zwei Antriebsräder (4-7) aufweist, wobei jedem Antriebsrad (4-7) jeweils eine individuell ansteuerbare Antriebseinrichtung (8-11) zugeordnet ist, **gekennzeichnet durch** eine Vorrichtung nach Anspruch 8.

10. Kraftfahrzeug (1) nach Anspruch 9, **dadurch gekennzeichnet, dass** die Antriebseinrichtungen (8-11) als Elektromaschinen, insbesondere als radnahe Elektromaschinen, ausgebildet sind.

**Claims**

1. Method for operating a motor vehicle (1) having at least one wheel axle (2, 3) with two drive wheels (4-7), wherein each drive wheel (4-7) is able to be driven by a wheel-specific drive device (8-11) in order to move the motor vehicle on a roadway, wherein a difference between the longitudinal forces able to be applied to the roadway at the drive wheels (4-7) of the wheel axle (2, 3) is determined as a function of a present coefficient of friction between the roadway and the respective drive wheel (4-7), **characterized in that** a torque difference for the drive wheels (4-7) is determined as a function of the difference and is set during the control of the drive devices (8-11), so that the drive devices (8-11) of the wheel axle (2, 3) are controlled as a function of the difference between the longitudinal forces able to be applied to the roadway at the drive wheels of the wheel axle (2, 3).

2. Method according to Claim 1, **characterized in that** the difference is additionally determined as a function of a wheel speed of the respective drive wheel, a longitudinal acceleration of the motor vehicle (1) and/or a contact force of the respective drive wheel (4-7) .

3. Method according to either of the preceding claims, **characterized in that** the drive devices (8-11) are controlled so as to in each case generate a target wheel torque ($M_{10}$, $M_{11}$) as a function of a required axle-drive torque ($M_A$) for the wheel axle (4-7).

4. Method according to one of the preceding claims, **characterized in that** the respective target wheel torque ($M_{10}$, $M_{11}$) is determined from half the axle-drive torque ($M_A$) and half the torque difference ($M_D$).

5. Method according to one of the preceding claims, **characterized in that** half the torque difference ($M_D$) is added to half the axle-drive torque ($M_A$) at one of the drive wheels (4-7) and is subtracted from half the axle-drive torque ($M_A$) at the other of the drive wheels (4-7).

6. Method according to one of the preceding claims, **characterized in that** a maximum torque difference is predefined as a function of a present driving situation.

7. Method according to Claim 6, **characterized in that** the driving situation is ascertained as a function of a set steering angle, a steering torque applied by the driver of the motor vehicle (1), a transverse force, an acceleration force, a rate of rotation and/or a driving speed of the motor vehicle (1).

8. Apparatus for operating a motor vehicle (1) having at least one wheel axle (2, 3) with two drive wheels (4-7), wherein each drive wheel (4-7) is assigned a drive device (8-11), **characterized by** a control device which is configured to control the motor vehicle in such a way that it is operated according to the method according to one of Claims 1 to 7.

9. Motor vehicle (1) having at least one wheel axle (2, 3) which has two drive wheels (4-7), wherein each drive wheel (4-7) is in each case assigned an individually controllable drive device (8-11), **characterized by** an apparatus according to Claim 8.

10. Motor vehicle (1) according to Claim 9, **character-**

**ized in that** the drive devices (8-11) are in the form of electric machines, in particular in the form of electric machines close to wheels.

## Revendications

1. Procédé pour faire fonctionner un véhicule automobile (1) qui présente au moins un essieu (2, 3) avec deux roues motrices (4-7), chaque roue motrice (4-7) pouvant être entraînée par un dispositif d'entraînement (8-11) individuel à la roue, afin de déplacer le véhicule automobile sur une chaussée, une différence entre les forces longitudinales pouvant être transmises à la chaussée au niveau des roues motrices (4-7) de l'essieu (2, 3) étant déterminée en fonction d'un coefficient de frottement actuel entre la chaussée et la roue motrice (4-7) respective, **caractérisé en ce qu'**en fonction de la différence, une différence de couple pour les roues motrices (4-7) est déterminée et réglée lors de la commande des dispositifs d'entraînement (8-11), de telle sorte que les dispositifs d'entraînement (8-11) de l'essieu (2, 3) sont commandés en fonction de la différence entre les forces longitudinales pouvant être transmises à la chaussée au niveau des roues motrices de l'essieu (2, 3).

2. Procédé selon la revendication 1, **caractérisé en ce que** la différence est en outre déterminée en fonction d'une vitesse de roue, de la roue motrice respective, d'une accélération longitudinale du véhicule automobile (1) et/ou d'une force de contact de la roue motrice (4-7) respective.

3. Procédé selon l'une quelconque des revendications précédentes, **caractérisé en ce que** les dispositifs d'entraînement (8-11) sont commandés pour générer un couple de roue de consigne ($M_{10}$, $M_{11}$) en fonction d'un couple d'entraînement d'essieu demandé ($M_A$) pour l'essieu (4-7).

4. Procédé selon l'une quelconque des revendications précédentes, **caractérisé en ce que** le couple de roue de consigne respectif ($M_{10}$, $M_{11}$) est déterminé à partir de la moitié du couple d'entraînement d'essieu ($M_A$) et de la moitié de la différence de couple ($M_D$).

5. Procédé selon l'une quelconque des revendications précédentes, **caractérisé en ce que** la moitié de la différence de couple ($M_D$)est ajoutée à la moitié du couple d'entraînement ($M_A$) au niveau de l'une des roues motrices (4-7) et soustraite de la moitié du couple d'entraînement ($M_A$) au niveau de l'autre des roues motrices (4-7).

6. Procédé selon l'une quelconque des revendications précédentes, **caractérisé en ce qu'**une différence de couple maximale est prédéterminée en fonction d'une situation de conduite actuelle.

7. Procédé selon la revendication 6, **caractérisé en ce que** la situation de conduite est déterminée en fonction d'un angle de braquage réglé, d'un couple de braquage appliqué par le conducteur du véhicule automobile (1), d'une force transversale, d'une force d'accélération, d'une vitesse de rotation et/ou d'une vitesse de déplacement du véhicule automobile (1).

8. Dispositif pour faire fonctionner un véhicule automobile (1) qui présente au moins un essieu (2, 3) avec deux roues motrices (4-7), un dispositif d'entraînement (8-11) étant associé à chaque roue motrice (4-7), **caractérisé par** un appareil de commande qui est adapté pour commander le véhicule automobile de telle sorte qu'il fonctionne conformément au procédé selon l'une quelconque des revendications 1 à 7.

9. Véhicule automobile (1), avec au moins un essieu (2, 3) qui présente deux roues motrices (4-7), à chaque roue motrice (4-7) étant associé un dispositif d'entraînement (8-11) pouvant être commandé individuellement, **caractérisé par** un dispositif selon la revendication 8.

10. Véhicule automobile (1) selon la revendication 9, **caractérisé en ce que** les dispositifs d'entraînement (8-11) sont configurés sous forme de machines électriques, notamment sous forme de machines électriques proches des roues.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009055160 A1

- EP 2752340 A1